**Europäisches Patentamt**

(19) **European Patent Office**

**Office européen des brevets**

(11) Numéro de publication: **0 130 261**
**B1**

(12) # FASCICULE DE BREVET EUROPÉEN

(45) Date de publication du fascicule du brevet:
**15.10.86**

(51) Int. Cl.⁴: **H 04 M 19/00**

(21) Numéro de dépôt: **83430021.2**

(22) Date de dépôt: **30.06.83**

(54) **Circuit alimenteur en courant continu pour circuit d'interface de ligne.**

(43) Date de publication de la demande:
**09.01.85 Bulletin 85/2**

(45) Mention de la délivrance du brevet:
**15.10.86 Bulletin 86/42**

(84) Etats contractants désignés:
**DE FR GB**

(56) Documents cité:
**EP-A-0 096 473**
**US-A-4 007 335**

**ELECTRICAL COMMUNICATION, vol. 44, no. 4, 1969, pages 340-347, Londres, GB D. FISCHBUCH et al.: "Balanced electronic receiver for loop signaling"**

(73) Titulaire: **International Business Machines Corporation, Old Orchard Road, Armonk, N.Y. 10504 (US)**
(84) Etats contractants désignés: **DE GB**

(73) Titulaire: **Compagnie IBM FRANCE, 5 Place Vendôme, F-75000 Paris 1er (FR)**
(84) Etats contractants désignés: **FR**

(72) Inventeur: **Ferry, Michel, 52, Allée des Micocouliers Hameau de Puissanton, F-06220 Vallauris (FR)**
Inventeur: **Trehin, Jacques Louis, 70, Boulevard Carnot, F-06300 Nice (FR)**

(74) Mandataire: **de Pena, Alain, Compagnie IBM France Département de Propriété Intellectuelle, F-06610 La Gaude (FR)**

## Description

## Domaine Technique

La présente invention concerne les circuits alimenteurs en courant continu, et plus particulièrement un circuit alimenteur qui se prête bien à une utilisation dans les circuits d'interface de ligne à transformateur.

## Etat de la Technique

Il existe de nombreux systèmes de télécommunication dans lesquels plusieurs stations éloignées sont reliées à un système de traitement ou d'interconnexion au moyen de lignes de téléconmunication bifilaires. Ces systèmes incluent les systèmes téléphoniques dans lesquels un central automatique privé est relié par des lignes téléphoniques bifilaires à des postes d'abonné, des stations de données et d'autres centraux téléphoniques privés ou publics. Ces lignes téléphoniques bifilaires sont connectées au central automatique privé par l'intermediaire d'un circuit connu sous la désignation de circuit d'interface de ligne.

Il existe deux types de circuits d'interface de ligne: les circuits d'interface de ligne dits alimentés et les circuits d'interface de ligne dits alimenteurs. Un circuit d'interface de ligne alimenté est caractérisé par le fait qu'il est alimenté en courant continu par la ligne à laquelle il est relié. Un tel circuit est utilisé par exemple dans les centraux privés lorsque la ligne à laquelle il est relié, est connectée à un central public à son extrémité éloignée. Un circuit d'interface de ligne alimenteur est caractérisé par le fait qu'il alimente en courant continu la ligne à laquelle il est relié. Un tel circuit est utilisé par exemple dans les centraux téléphoniques privés ou publics lorsque la ligne à laquelle il est relié est connectée à un poste d'abonné à son extrémité éloignée. Etant donné que dans un central téléphonique il est nécessaire d'avoir autant de circuits d'interface de ligne qu'il y a de lignes qui lui sont attachées, et que le nombre de ces lignes peut être très important, le coût de l'ensemble de ces circuits représente une part substantielle du coût total du central. C'est pourquoi un souci permanent des concepteurs de circuits d'interface de ligne est d'en réduire le coût tout en améliorant la qualité.

L'art antérieur propose un très grand nombre de circuits d'interface de ligne alimenteurs, et il serait fastidieux d'en faire l'inventaire. On rappellera simplement qu'il existe principalement deux catégories de circuits d'interface de ligne: ceux qui utilisent un transformateur de ligne, et ceux, plus récents, qui n'utilisent pas de transformateur de ligne, mais uniquement des circuits intégrés à dispositifs semi-conducteurs.

Les circuits à transformateur peuvent être illustrés par celui décrit dans le brevet français FR-A-2 340 652. Dans ce circuit, le central téléphonique est couplé à un premier enroulement d'un transformateur de ligne qui a son second enroulement couplé à la ligne. Chacune des bornes d'une batterie est reliée à une résistance d'alimentation qui est elle-même reliée à un des fils de la ligne à travers une résistance de ligne. Le point de connexion entre la résistance de ligne et la résistance d'alimentation de l'un des fils est relié directement au second enroulement du transformateur alors que le point de connexion entre la résistance de ligne et la résistance d'alimentation de l'autre fil est relié au premier enroulement du transformateur à travers une résistance et un condensateur. Ce circuit d'une grande simplicité présente de nombreux avantages mais n'est pas pourvu de moyens pour empêcher les signaux alternatifs sur la ligne d'être absorbés par la batterie ce qui peut créer le phénomène connu de diaphonie entre toutes les lignes alimentées à partir de la même batterie.

Les circuits d'interface de ligne sans transformateur peuvent être illustrés par celui décrit dans le brevet français FR-A-2 416 600. Il est difficile ici de décrire en quelques lignes ce circuit qui comprend plusieurs éléments semi-conducteurs interconnectés. L'industrie fonde beaucoup d'espoir sur ces circuits qui, pouvant être totalement intégrés, auraient un coût relativement faible. Cependant, un de ses inconvénients, l'absence d'isolation galvanique entre la ligne et le central téléphonique, limite l'utilisation de ces circuits intégrés à des environnements où l'isolation galvanique de la ligne n'est pas critique.

## Exposé de l'Invention

Un objet de l'invention est de fournir un circuit alimenteur en courant continu simple et présentant une très grande impédance aux courants alternatifs produits par le dispositif alimenté par le circuit alimenteur.

Un autre objet de l'invention est de fournir un circuit alimenteur pour un circuit d'interface de ligne utilisant un transformateur de ligne et alimenté par une batterie, dans lequel celle-ci est fortement protégée contre les signaux alternatifs sur la ligne.

D'une manière générale, l'invention propose un circuit alimenteur comprenant une paire de bornes de sortie reliées au dispositif à alimenter une source de tension continue ayant une première et une seconde bornes, une première résistance ayant une première extrémité reliée à ladite première borne de la source de tension continue, et une seconde extrémité reliée à l'une desdites bornes de sortie, et une seconde résistance ayant une première extrémité reliée à ladite seconde borne de la source de tension continue et une seconde extrémité reliée à l'autre desdites bornes de sortie. Le circuit de l'invention est caractérisé en ce qu'il comprend:
- un trajet de dérivation de courant continu, connecté entre lesdites secondes extrémités desdites première et seconde résistances, et dans lequel est inséré un générateur de courant,
- des moyens pour maintenir le courant continu circulant dans ce trajet à une valeur constante,
- des moyens de détection pour mesurer le courant alternatif circulant entre lesdites bornes de sortie et traversant le dispositif à alimenter, et
- des moyens de commande couplés auxdits moyens de détection pour commander ledit générateur de courant de façon que le trajet de dérivation soit parcouru par un courant alternatif de contre-réaction, et pour ajuster la valeur de ce dernier courant de façon à annuler ledit courant alternatif circulant entre lesdites bornes de sortie.

Selon un aspect de l'invention ledit trajet de dérivation de courant comprend une troisième résistance, et lesdits moyens pour maintenir le courant continu à une valeur constante comprennent une source de tension de référence et des moyens pour maintenir la tension aux bornes de ladite troisième résistance égale à la tension de référence.

Selon un autre aspect de l'invention, lesdits moyens de détection comprennent un pont de résistances symétrique et différentiel comprenant une quatrième et une cinquième résistances de même valeur connectées chacune entre l'une des bornes d'accès et ladite seconde extrémité de chacune desdites première et seconde résistances, et deux branches croisées comprenant chacune deux résistances de même valeur.

Selon un autre aspect de l'invention, ladite source de tension de référence est constituée par une diode connectée dans le sens passant entre ladite seconde extrémité de la première résistance et le pont de résistances.

Selon un autre aspect de l'invention, le dispositif à alimenter comprend une ligne bifilaire connectée entre lesdites bornes de sortie, et un transformateur ayant un premier enroulement couplé auxdites bornes de sortie à travers un condensateur et un second enroulement couplé à un réseau de connexion.

**Brève Description des Figures**

La Figure 1 représente un exemple de réalisation d'un circuit d'interface de ligne incorporant l'invention.

La figure 2 est un modèle équivalent en courant alternatif du circuit de la figure 1.

**Description Détaillée des Figures**

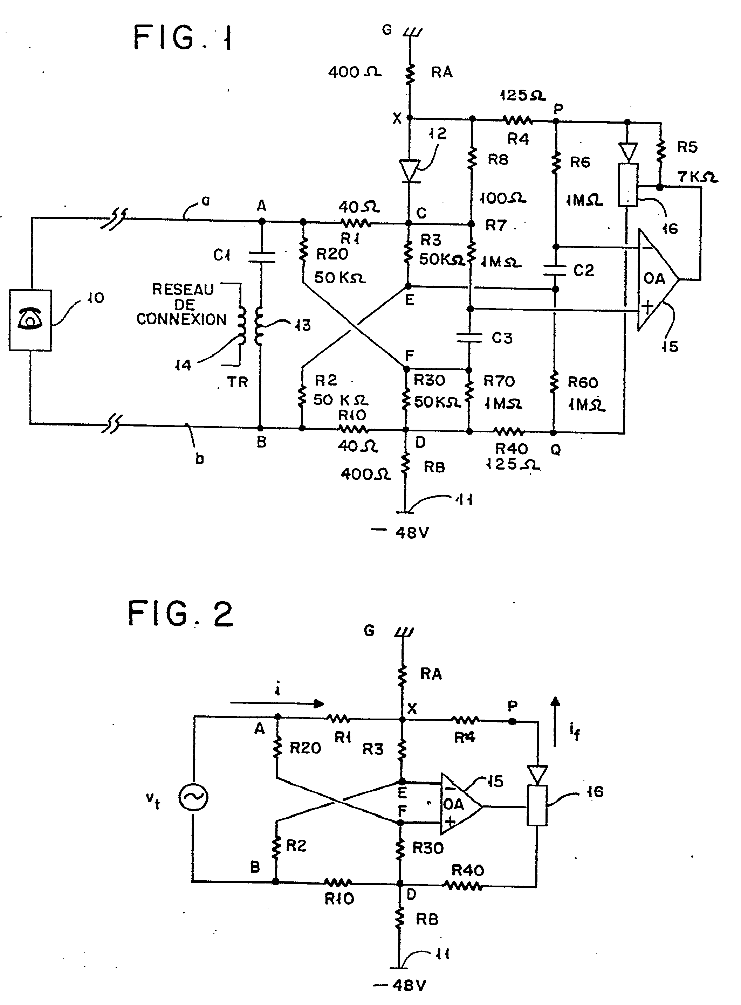

On a représenté sur la figure 1 un exemple de réalisation d'un circuit d'interface de ligne d'abonné incorporant le circuit alimenteur de l'invention et qui couple un poste d'abonnés 10 au réseau de connexion d'un central téléphonique.

Le poste d'abonné 10 est relié à une paire de bornes de sortie A et B du circuit alimenteur par les fils a et b d'une ligne d'abonné. (Les fils a et b sont souvent désignés respectivement par Tip et Ring dans la littérature anglo-saxonne). Le poste d'abonné 10 est alimenté en courant continu à partir d'une batterie qui a ses bornes positive et négative reliées respectivement à un point de masse G et à une borne 11. Cette batterie peut fournir, par exemple, une tension typique de 48 volts. Une résistance d'alimentation RA a une de ses extrémités reliée au point de masse G, et son autre extrémité reliée au fil a de la ligne d'abonné à travers une diode 12 montée dans le sens passant, et une résistance R1. Une résistance d'alimentation RB de même valeur que RA a une de ses extrémités reliée à la borne négative 11 et son autre extrémité reliée au fil b de la ligne d'abonné à travers une résistance R10 de même valeur que la résistance R1. La borne A est reliée à travers un condensateur C1 à une des bornes de l'enroulement primaire 13 d'un transformateur de ligne TR dont l'autre borne est reliée à la borne B du circuit alimenteur. L'enroulement secondaire 14 du transformateur de ligne TR est relié au réseau de connexion du central téléphonique. Le condensateur C1 est un condensateur de blocage qui empêche la circulation du courant continu fourni par la batterie, à travers l'enroulement primaire 13 du transformateur de ligne TR, éliminant ainsi tout risque de saturation de ce dernier, et permettant l'utilisation d'un transformateur de ligne de faibles dimensions. La borne B est reliée au point de connexion, référencé C, entre la diode 12 et la résistance R1, à travers deux résistances connectées en série R2 et R3 de même valeur. De même, la borne A est reliée au point de connexion, référencé D, entre les résistances RB et R10, à travers deux résistances connectées en série R20 et R30 de même valeur, et de valeur égale à celle des résistances R2 et R3. Les résistances R1, R2, R3, R10, R20 et R30 constituent un pont symétrique et différentiel à branches croisées. Les points de connexion E entre les résistances R2 et R3 et F entre les résistances R20 et R30 constituent la sortie différentielle du pont et sont reliés respectivement à travers deux condensateurs de couplage C2 et C3, aux entrées inverseuse et non inverseuse d'un amplificateur opérationnel (OA) 15. La sortie de l'amplificateur opérationnel 15 commande un générateur de courant qui, dans l'exemple illustré sur la figure, est constitué par un transistor PNP 16 dont la base est reliée à la sortie de l'amplificateur opérationnel 15. Le transistor 16 a son émetteur relié au point de connexion, X, entre la résistance d'alimentation PNP et la diode 12, à travers une résistance R4, et son collecteur relié au point D à travers une résistance R40 de même valeur que la résistance R4. Une résistance R5 est connectée entre la base et l'émetteur du transistor 16. Le point de connexion, P, entre l'émetteur du transistor 16 et la résistance R4 est relié à l'entrée inverseuse de l'amplificateur opérationnel 15 à travers une résistance de très forte valeur R6. Le point de connexion, Q, entre le collecteur du transistor 16 et la résistance R40 est relié au point E à travers une résistance R60 de même valeur que la résistance R6. Le point C est relié à l'entrée non inverseuse de l'amplificateur opérationnel 15 à travers une résistance R7 de même valeur que la résistance R6. Le même valeur que la résistance R7. Selon un mode de réalisation préféré, une résistance R8 est connectée entre l'anode et la cathode de la diode 12.

On décrira maintenant le fonctionnement du circuit d'interface illustré sur la figure 1 en supposant tout d'abord que la résistance R8 n'existe pas. La présence de cette résistance dans le circuit d'interface constitue en effet un perfectionnement qui sera décrit ultérieurement.

En fonctionnement en courant continu, lorsque le poste d'abonné 10 est en position décrochée, un courant de batterie s'écoule à partir du point de masse G, traverse la résistance d'alimentation RA et se divise en un premier courant qui traverse la diode 12, et un second courant qui traverse la résistance R4. La valeur des résistances R2, R3, R20 et R30 est choisie élevée (par exemple 50 kiloohms) par rapport à la résistance totale de la ligne d'abonné et du poste d'abonné, de façon que le pont des résistances R1-R30 ne dérive qu'un très faible courant et qu'ainsi la quasi totalité du courant qui traverse la diode 12 constitue le courant de la ligne IL envoyé sur le fil à travers la résistance R1. Ce courant de ligne circule sur le fil a, traverse le poste d'abonné 10 en position décrochée, circule sur le fil b et se referme sur le point de masse G à travers les résistances R10 et RB, la borne 11 et la batterie. La valeur totale des résistances RA et R1 (et par conséquent celle des résistances RB et R10) est choisie en fonction de la valeur de la résistance de la ligne d'abonné et du poste d'abonné et de la valeur souhaitée du courant de ligne IL. Dans l'exemple de réalisation illustré sur la figure 1 on a choisi cette valeur totale égale à 440 ohms. Les résistances R1 et R10 sont des résistances de détection qui permettent de mesurer les courants alternatifs les traversant, et sont choisies de faible valeur. Dans l'exemple de réalisation illustré sur la figure 1, on a choisi la valeur de RA et RB égale à 400 ohms et celle de R1 et R10 à 40 ohms.

L'amplificateur opérationnel 15 présentant une très grande impédance d'entrée, qui est en outre accrue par la présence de la résistance R6 de forte valeur (par exemple égale à 1 Mégaohms), et la résistance R5 qui est utilisée pour polariser la base du transistor 16 et dont la valeur est par exemple de 7 Kiloohms n'étant parcourue que par un très faible courant, le courant qui traverse la résistance R4, et qu'on désignera par courant de contrôle Ic, traverse pratiquement dans sa totalité le transistor 16 et la résistance R40 et s'écoule vers la borne 11 à travers la résistance d'alimentation RB. La valeur du courant de contrôle Ic est maintenue constante et égale à Io par la réaction négative constituée par l'amplificateur opérationnel 15 et le transistor 16. La valeur du courant de contrôle Ic est maintenue constante en maintenant la chute de tension aux bornes de la résistance R4 constante et égale à la tension de référence fournie par la chute de tension aux bornes de la diode 12. Etant donné que la diode 12 et la résistance R4 ont une de leurs extrémités connectées entre elles au point X, la valeur du courant de contrôle Ic est maintenue constante en maintenant la tension à l'autre extrémité de la résistance R4 (point P) égale à la tension à l'autre extrémité (point C) de la diode 12. Les tensions aux points C et P sont ramenées respectivement par les résistances de forte valeur R7 et R6 aux entrées non inverseuse et inverseuse de l'amplificateur opérationnel 15. Lorsque le courant de contrôle Ic a une valeur égale à Io, les tensions aux points P et C sont égales, la tension différentielle appliquée à l'entrée de l'amplificateur opérationnel 15 est nulle et ce dernier tire un courant de base de référence qui maintient le transistor 16 a son point de fonctionnement de repos. Lorsque le courant de contrôle Ic a une valeur supérieure à Io, la tension au point P est plus négative que celle au point C et l'amplificateur opérationnel 15 tire un courant de base inférieur au courant de base de référence, le transistor 16 conduit moins de courant et la valeur du courant de contrôle Ic décroît. Lorsque le courant de contrôle Ic a une valeur inférieure à Io, la tension au point P est moins négative que celle au point C et l'amplificateur opérationnel 15 tire un courant de base supérieur au courant de base de référence, le transistor 16 conduit plus de courant, et la valeur du courant de contrôle Ic croit. La valeur de la résistance R4 est choisie en fonction de la valeur de la tension de référence utilisée, dans notre exemple de réalisation, la valeur de la chute de tension aux bornes de la diode 12, et de la valeur du courant de contrôle de référence souhaitée Io. Dans l'exemple de réalisation illustré sur la figure, la diode fournit une tension de référence de 700 mV, et la valeur de la résistance R4 a été choisie égale à 125 ohms. Les résistances R40, R60 et R70 qui sont respectivement identiques aux résistances R4, R6 et R7 assurent la symétrie du circuit d'interface par rapport à la ligne d'abonné.

Le circuit d'interface de ligne reçoit deux types de signaux alternatifs qui sont les signaux dits longitudinaux et les signaux dits transversaux. Les signaux longitudinaux sont des signaux parasites qui sont principalement dus à des courants induits dans la ligne d'abonné par des champs électromagnétiques extérieurs à celle-ci. Ces signaux longitudinaux se présentent sous la forme de tensions parasites sur les deux fils a et b de la ligne d'abonné, qui varient d'une même quantité par rapport à la masse. Les signaux transversaux sont les signaux porteurs d'information provenant, ou à destination du poste d'abonné 10, et se présentent sous la forme d'une différence de potentiel entre les deux fils a et b de la ligne d'abonné.

Les signaux longitudinaux étant des signaux parasites, le circuit d'interface doit en annuler, ou tout au moins minimiser les effets. Ces signaux ne doivent ni être transmis au réseau de connexion, ni altérer le fonctionnement du circuit d'interface.

Soit $v_1$ la tension produite par les signaux longitudinaux sur chacun des fils a et b. Cette tension $v_1$ se retrouve sur chacune des bornes de l'enroulement primaire 13 du transformateur TR et ne crée donc aucune différence de potentiel parasite aux bornes de cet enroulement. Cette tension parasite n'est donc pas transférée au réseau de connexion qui est connecté aux bornes de l'enroulement secondaire 14 du transformateur TR.

La tension parasite $v_1$ crée une tension parasite $v'_1$ en chacun des points C et D, mais n'affecte pas la différence de potentiel entre ces points. L'alimentation en courant continu de la ligne d'entrée ne s'en trouve donc pas affectée. On a un système flottant qui peut absorber des signaux longitudinaux importants. Le pont de résistances R1, R10, R2, R20, R3 et R30 étant un pont symétrique, la tension parasite $v_1$ en chacun des points A et B ne crée aucune différence de potentiel parasite entre les points E et F et n'a donc aucun effet sur l'amplificateur opérationnel 15 et par là même aucune influence sur la régulation du courant de contrôle Ic.

Alors que le circuit d'interface de ligne élimine les effets des signaux longitudinaux conme décrit plus haut, il doit transmettre les signaux transversaux provenant du poste d'abonné 10 au réseau de connexion et vice-versa. Il doit en outre présenter une impédance très grande aux signaux transversaux principalement pour les deux raisons suivantes: premièrement, si le circuit d'interface de ligne présentait une impédance relativement faible aux signaux transversaux provenant par exemple du poste d'abonné, il en absorberait une partie réduisant d'autant les signaux fournis au réseau de connexion; ceci entraînerait un mauvais rendement de la transmission poste d'abonné-réseau de connexion. Deuxièmement, si le circuit d'interface de ligne présentait une impédance relativement faible aux signaux transversaux, une partie de ces derniers serait absorbée par la batterie créant un phénomène de diaphonie entre les lignes d'abonné alimentées à partir de cette même batterie.

En se référant de nouveau à la figure 1, les signaux transversaux en provenance du poste d'abonné sont appliqués à l'enroulement primaire 13 du transformateur de ligne TR et sont transférés au réseau de connexion par l'enroulement secondaire 14. De même, les signaux transversaux en provenance du réseau de connexion sont transférés au poste d'abonné à travers le transformateur de ligne TR et la ligne d'abonné.

Selon l'invention, une impédance infinie est synthétisée par le circuit d'interface en détectant le courant alternatif i à travers les résistances R1 et R10, créé par les signaux transversaux et en générant un courant de contre réaction -i qui se superpose au courant i dans les résistances R1 et R10 et l'annule.

Le modèle équivalent en courant alternatif au circuit de la figure 1 qu'on a représenté sur la figure 2 facilitera la compréhension du fonctionnement de cette contre-réaction. Dans ce modèle équivalent, on a représenté les signaux transversaux par une source de tension alternative $v_t$ connectée entre les bornes A et B et le transistor 16 par un générateur de courant. On suppose que la source de tension $v_t$ crée un courant i qui circule dans la résistance R1 dans le sens A vers C et dans la résistance R10 dans le sens D vers B. Ce courant développe entre les points E et F du pont de résistances R1-R30 une tension de conmande qui est appliquée entre les deux entrées de l'amplificateur opérationnel 15. L'amplificateur opérationnel commande le transistor 16 de façon à ce que celui-ci génère un courant de réaction $i_f$ qui circule dans le trajet de dérivation constitué par les résistances R4 et R40 et le transistor 16, de P vers X. Une partie $i_{f1}$ du courant $i_f$ est dérivée par la résistance d'alimentation et une autre partie $i_{f2}$ de ce courant circule à travers les résistances R1 et R10 dans le sens opposé au courant i. Le courant résultant circulant dans les résistances R1 et R10 est alors un courant $i-i_{f2}$. Tant que i est supérieur à $i_{f2}$ la tension de commande à l'entrée de l'amplificateur opérationnel 15 sera non nulle, et le courant $i_{f2}$ croîtra. Un pont d'équilibre est obtenu lorsque le courant $i_{f2}$ a la même amplitude que le courant i. A ce point d'équilibre aucun courant alternatif ne circule dans les résistances R1 et R10 et le circuit d'interface présente une impédance substantiellement infinie aux signaux transversaux.

On décrira maintenant le perfectionnement qui consiste à ajouter la résistance R8 en parallèle sur la diode 12. Lorsque le poste d'abonné est en position raccrochée, aucun courant ne circule dans la ligne d'abonné si ce n'est quelque courant de fuite. En l'absence de la résistance R8, du fait de la présence du pont, on aura un courant traversant la résistance d'alimentation RA, la diode 12, le pont de résistances et la résistance d'alimentation RB, et le courant de contrôle Ic circulant du trajet de dérivation résistance R4, transistor 16, résistance R40. Ces deux courants entraînent une dissipation d'énergie inutile. La résistance R8 est prévue en shunt sur la diode 12 afin de réduire cette dissipation d'énergie. La valeur de la résistance de shunt R8 est choisie telle que lorsque le poste d'abonné est en position raccrochée, c'est-à-dire lorsque le courant de ligne est inférieur à une valeur prédéterminée, la chute de potentiel aux bornes de la résistance R8 soit telle que la diode 12 se trouve bloquée dans l'état non conducteur. Par exemple, la résistance R8 peut avoir une valeur égale à 100 ohms. La diode 12 étant bloquée, un courant circule du point de masse G à la borne négative 11 à travers le pont de résistances R1-R30 et la résistance RB. Compte-tenu de la valeur des résistances RA, RB, R8 et de celle du pont de résistances R1-R30, ce courant aura une valeur de l'ordre de 1 mA. Ce courant de 1 mA crée une chute de tension de 100 mV entre les bornes de la diode 12, et le circuit de réaction comprenant l'amplificateur 15 et le transistor 16 régulera le courant de contrôle Ic à une valeur telle que la tension aux bornes de la résistance R4 soit aussi de 100 mV. Le courant de contrôle Ic est alors ramené à une valeur inférieure à 1 mA.

La présence de la résistance de shunt R8 réduit donc de façon non négligeable la puissance dissipée par le circuit d'interface lorsque le poste d'abonné est en position raccrochée. Lorsque le poste d'abonné est en position décrochée, la chute de tension aux bornes de la résistance R8 est supérieure à la valeur au seuil de conduction de la diode 12, celle-ci conduit et court-circuite la résistance de shunt R8.

L'homme de l'art comprendra que bien que l'on ait décrit en référence aux figures 1 et 2 un circuit d'interface de ligne incorporant le circuit alimenteur de l'invention, l'utilisation de ce dernier n'est bien sûr pas limitée aux circuits d'interface de ligne.

## Revendications

1. Circuit alimenteur comprenant une paire de bornes de sortie (A et B) reliées au dispositif à alimenter, une source de tension continue ayant une première (G) et une seconde (11) bornes, une première résistance (RA) ayant une première extrémité reliée à ladite première borne (G) de la source de tension continue, et une seconde extrémité (X) reliée à l'une (A) desdites bornes de sortie et une seconde résistance (RB) ayant une première extrémité reliée à ladite seconde borne (11) de la source de tension continue, et une seconde extrémité reliée à l'autre (B) desdites bornes de sortie caractérisé en ce qu'il comprend:
- un trajet de dérivation de courant continu, (R4, 16, R40) connecté entre lesdites secondes extrémités desdites première et seconde résistances, et dans lequel est inséré un générateur de courant (16),
- des moyens (12, 15, R4, 16) pour maintenir le courant continu (Ic) circulant dans ce trajet à une valeur constante,
- des moyens de détection (R1, R10, R2, R20, R3, R30) pour mesurer le courant alternatif circulant entre lesdites bornes de sortie et traversant le dispositif à alimenter, et
- des moyens de commande (C2, C3, 15) couplés auxdits moyens de détection pour comnander ledit générateur de courant de façon que le trajet de dérivation soit parcouru par un courant alternatif de contre-réaction, et pour ajuster la valeur de ce dernier courant de façon à annuler ledit courant alternatif circulant entre lesdites bornes de sortie.

2. Circuit alimenteur selon la revendication 1, caractérisé en ce que ledit trajet de dérivation de courant comprend une troisième résistance (R4), et en ce que lesdits moyens pour maintenir le courant continu à une valeur constante comprennent une source de tension de référence (12) et des moyens (R6, R7, 15) pour maintenir la tension aux bornes de ladite troisième résistance égale à la tension de référence.

3. Circuit alimenteur selon la revendication 1 ou 2, caractérisé en ce que lesdits moyens de détection comprennent un pont de résistances symétrique et différentiel comprenant une quatrième (R1) et une cinquieme resistances (R10) de même valeur connectées chacune entre l'une des bornes de sortie (A, B) et ladite seconde extrémité de chacune desdites première et seconde résistances (RA, RB), et deux branches croisées comprenant chacune deux résistances de même valeur.

4. Circuit alimenteur selon la revendication 3, caractérisé en ce que lesdits moyens de commande comprennent:
- un amplificateur opérationnel (15) et
- un premier et un second condensateurs (C3, C4) pour coupler respectivement les deux centres desdites branches croisées aux entrées de l'amplificateur opérationnel.

5. Circuit alimenteur selon la revendication 3, caractérisé en ce que ladite source de tension de référence est constituée par une diode (12) connectée dans le sens passant entre ladite seconde extrémité de la première résistance et le pont de résistances.

6. Circuit alimenteur selon la revendication 5, caractérisé en ce qu'il comprend une sixième résistance (R8) de shunt connectée en parallèle sur la diode (12).

7. Circuit alimenteur selon la revendication 2, caractérisé en ce que ledit trajet de dérivation comprend une septième résistance (R40) de même valeur que ladite troisième résistance (R4).

8. Circuit alimenteur selon l'une quelconque des revendications précédentes caractérisé en ce que le dispositif à alimenter comprend:
- une ligne à deux fils (a et b), chacun deux étant relié à l'une desdites bornes de sortie, et
- un transformateur (TR) ayant un premier enroulement couplé auxdites bornes de sortie à travers un troisième condensateur et un second enroulement couplé à un réseau de connexion.

## Patentansprüche

1. Versorgungsschaltung mit einem Paar Ausgangsklemmen (A und B), die mit der zu versorgenden Vorrichtung verbunden sind, und einer Gleichspannungsquelle mit einer ersten (G) und einer zweiten (11) Klemme, einem ersten Widerstand (RA) mit einem ersten Ende, das mit der besagten ersten Klemme (G) der Gleichspannungsquelle verbunden ist, und mit einem zweiten Ende (X), das mit einer (A) der besagten Ausgangsklemmen verbunden ist, und mit einem zweiten Widerstand (RB) mit einem Ende, das mit der besagten zweiten Klemme (11) der Gleichspannungsquelle verbunden ist und einem zweiten Ende, das mit der anderen (B) der besagten Klemmen verbunden ist, dadurch gekennzeichnet, dass sie enthält:

- einen Gleichstromumleitungsweg (R4, 16, R40), angeschlossen zwischen den besagten zweiten Enden des besagten ersten und zweiten Widerstandes, wobei in diesen Umleitungsweg ein Stromgenerator (16) eingefügt ist,
- Mittel (12, 15, R4, 16), um den in diesem Weg fliessenden Gleichstrom (Ic) konstantzuhalten,
- Detektionsmittel (R1, R10, R2, R20, R3, R30), um den Wechselstrom zu messen, der zwischen den besagten Ausgangsklemmen und durch die zu speisende Vorrichtung fliesst, und
- Steuermittel (C2, C3, 15), die an die besagten Detektionsmittel gekoppelt sind, um den besagten Stromgenerator so zu steuern, dass der Umleitungsweg von einem Gegenkopplungswechselstrom durchflossen wird, um den Wert dieses letzteren Stromes so anzugleichen, dass der besagte zwischen den beiden Ausgangsklemmen fliessende Wechselstrom auf den wert Null gebracht wird.

2. Versorgungsschaltung gemäss Anspruch 1, dadurch gekennzeichnet, dass im besagten Stromumleitungsweg ein dritter Widerstand (R4) eingefügt ist, und dadurch, dass die besagten Mittel zur Konstanthaltung des Gleichstroms eine Bezugsspannungsquelle (12) und Mittel (R6, R7, 15) enthalten, um die Spannung an den Klemmen des besagten dritten Widerstandes mit der Bezugsspannung gleichzuhalten.

3. Versorgungsschaltung gemäss Anspruch 1 oder 2, dadurch gekennzeichnet, dass die besagten Detektionsmittel eine symmetrische und differentielle Widerstandsbrücke mit einem vierten (R1) und einem fünften (R10) Widerstand gleichen wertes umfassen, die an jeweils eine der Ausgangsklemmen (A, B) angeschlossen sind, und dass das besagte zweite Ende des besagten ersten bzw. zweiten Widerstandes (RA, RB) und zwei gekreuzte Zweige jeweils zwei Widerstände gleichen Wertes enthalten.

4. Versorgungsschaltung gemäss Anspruch 3, dadurch gekennzeichnet, dass die besagten Steuermittel umfassen:
- einen Einsatzverstärker (15) und
- einen ersten und einen zweiten Kondensator (C3, C4), um die beiden Zentren der besagten gekreuzten Zweige an den Eingängen des Einsatzverstärkers zu koppeln.

5. Versorgungsschaltung gemäss Anspruch 3, dadurch gekennzeichnet, dass die besagte Bezugsspannungsquelle aus einer Diode (12) besteht, die in Durchlassrichtung zwischen dem besagten zweiten Ende des ersten Widerstandes und der Widerstandsbrücke angeschlossen ist.

6. Versorgungsschaltung gemäss Anspruch 5, dadurch gekennzeichnet, dass sie einen sechsten Widerstand (R8) besitzt, der als Nebenschlusswiderstand zur Diode (12) parallel geschaltet ist.

7. Versorgungsschaltung gemäss Anspruch 2, dadurch gekennzeichnet, dass der besagte Umlenkweg einen siebten Widerstand (R40) gleichen Wertes wie der besagte dritte Widerstand (R4) enthält.

8. Versorgungsschaltung gemäss einem der vorangehenden Ansprüche, dadurch gekennzeichnet, dass die zu versorgende Vorrichtung enthält:
- eine Leitung mit zwei Drähten (a und b), von denen jeder an eine der besagten Ausgangsklemmen gelegt ist, und
- einen Transformator (TR), der eine erste Wicklung besitzt, welche durch einen dritten Kondensator an die besagten Ausgangsklemmen gekoppelt ist, und eine zweite Wicklung, die an ein Anschlussnetz gekoppelt ist.

## Claims

1. A feed circuit comprising a pair of output terminals (A and B) connected to the device to be fed, a DC voltage source having a first (G) and a second (11) terminals, a first resistor (RA) a first end of which is connected to said first terminal (G) of said DC voltage source and a second end (X) of which is connected to one (A) of said output terminals, and a second resistor (RB) a first end of which is connected to said second terminal (11) of said DC voltage source and the second end of which is connected to the other one (B) of said output terminals, characterized in that it includes:
- a secondary DC path (R4, 16, R40) connected between said second ends of said first and second resistors, and in which a current generator (16) is inserted,
- means (12, 15, R4, 16) for maintaining the direct current (Ic) flowing in said path at a constant value,
- detection means (R1, R10, R2, R20, R3, R30) for measuring the alternating current flowing between said output terminals and in the device to be fed, and
- control means (C2, C3, C15) connected to said detection means for controlling said current generator to cause a negative-feedback alternating current to flow in said secondary path, and for adjusting the value of the latter current so as to cancel out said alternating current flowing between said output terminals.

2. A feed circuit according to claim 1, characterized in that said secondary DC path includes a third resistor (R4) and in that said means for maintaining the direct current at a constant value includes a reference voltage source (12) and means (R6, R7, 15) for maintaining the voltage across said third resistor at a value equal to said reference voltage.

3. A feed circuit according to claim 1 or 2, characterized in that said detection means includes a symmetrical and differential resistance bridge including a fourth (R1) and a fifth (R10) resistors of identical value each of which is connected between one of said output terminals (A, B) and said second end of each of said first and second resistors (RA, RB), and two cross-connected legs including each two resistors of identical value.

4. A feed circuit according to claim 3, characterized in that said control means includes:
- an operational amplifier (15), and
- a first and a second capacitors (C3, C4) for coupling the two centers of said cross-connected legs to the inputs of the operational amplifier, respectively.

5. A feed circuit according to claim 3, characterized in that said reference voltage source consists of a diode (12) connected in the forward direction between said second end of the first resistor and the resistance bridge.

6. A feed circuit according to claim 5, characterized in that it includes a sixth resistor (R8) connected in parallel with said diode (12).

7. A feed circuit according to claim 2, characterized in that said secondary path includes a seventh resistor (R40) whose value is the same as that of said third resistor (R4).

8. A feed circuit according to any one of the preceding claims, characterized in that the device to be fed includes:
- a two-wire line, each of said wires (a and b) being connected to one of said output terminals, and
- a transformer (TR) having a first winding coupled to said output terminals through a third capacitor and a second winding coupled to a switching network.

# FIG. 1

# FIG. 2